# FASCICULE DE BREVET EUROPEEN

(11) **EP 0 811 857 B1**
(45) Date de publication et mention de la délivrance du brevet: **28.08.2002**
(21) Numéro de dépôt: 97401102.5
(22) Date de dépôt: 20.05.1997
(51) Int. Cl.: G01V 8/02

(54) **Système aéroporté d'acquisition et de traitement d'images à caractéristiques modulables**
Fliegende Anordnung zur Erfassung und Verarbeitung von Bildern mit variablen Merkmalen
Airborne system for acquisition and processing of images with variable caracteristics

(30) Priorité: 03.06.1996 FR 9606907
(43) Date de publication de la demande: 10.12.1997
(73) Titulaire: INSTITUT FRANCAIS DU PETROLE, 92852 Rueil-Malmaison Cedex (FR)
(72) Inventeur: Wadsworth, Alain, 78350 Jouy en Josas (FR); Goillot, Charles, 78640 St Germain de La Grange (FR); Sander, André, 78112 Fourqueux (FR); Renot, André, 95130 Franconville (FR)

(56) Documents cités:
- EP-A- 0 589 554
- DE-A- 4 428 055
- GB-A- 2 131 649
- US-A- 5 379 065
- BAZZANI M ET AL: "AIRBORNE FLUOROSENSORS, THE DESIGN OF HIGH SPECTRAL RESOLUTION SYSTEMS" QUANTITATIVE REMOTE SENSING FOR SCIENCE AND APPLICATIONS, FIRENZE, JULY 10 - 14, 1995, vol. 3, 10 juillet 1995, STEIN T I (ED ), pages 1738-1740, XP000547195
- DATABASE INSPEC INSTITUTE OF ELECTRICAL ENGINEERS, STEVENAGE, GB Inspec No. 4349187, GOWER J F R ET AL: "CCD-based imaging spectroscopy for remote sensing: the FLI and CASI programs" XP002039486 & CANADIAN JOURNAL OF REMOTE SENSING, OCT. 1992, CANADA, vol. 18, no. 4, ISSN 0703-8992, pages 199-208,
- DATABASE INSPEC INSTITUTE OF ELECTRICAL ENGINEERS, STEVENAGE, GB Inspec No. 2326964, NEVILLE R A ET AL: "Development and evaluation of the MEIS II multidetector electrooptical imaging scanner" XP002027440 & ADVANCED INFRARED SENSOR TECHNOLOGY, GENEVA, SWITZERLAND, 18-19 APRIL 1983, vol. 395, ISSN 0277-786X, PROCEEDINGS OF THE SPIE - THE INTERNATIONAL SOCIETY FOR OPTICAL ENGINEERING, 1983, USA, pages 101-108,

## Description

La présente invention concerne un système d'acquisition et de traitement d'images d'une zone survolée par un aéronef ou un satellite, dans plusieurs bandes spectrales modulables sur commande, du spectre visible ou infra-rouge, dans le but de détecter des phénomènes liés à des altérations significatives de la zone et notamment de sa couverture végétale.

Le système selon l'invention trouve des applications dans des domaines variés où les changements d'état de la végétation se traduisent par des modifications significatives du rayonnement qui en émane dans des parties bien délimitées du spectre de fréquence. On peut citer par exemple :
- la télédétection des feux de forêt ou analogues et la prédiction des zones les plus menacées au cours de leur évolution;
- la télédétection des fuites de substances telles que des hydrocarbures hors de réservoirs ou conduites, notamment hors de pipelines enterrés par détection des altérations subies par la végétation alentour;
- la télédétection de dégâts causés par des événements climatiques: grêlage, verse, sécheresse, gel, par les agents pathogènes, les insectes, les oiseaux, etc.

Différents types de dispositifs de télédétection sont utilisés notamment pour la surveillance des incendies. Ils sont installés au sol en un lieu d'observation, dans un aéronef ou encore un aérostat reliés à une station au sol par câble ou transmission hertzienne, et sont adaptés à acquérir des images des radiations émises par une zone surveillée dans plusieurs bandes spectrales différentes et à les traiter pour mettre en évidence visuellement certains données caractéristiques de l'incendie. Des dispositifs de ce type sont décrits par exemple dans les documents suivants :
- Hirsch S.N et al., 1973, The bispectral Forest Fire Detection System, in The Surveillant Science, Holz Ed., Houghton Mifflin Cy, Boston;
- Goillot C. et al., 1988, in Etude dynamique des feux de forêts par scanner aéroporté multibande dans le visible et le thermique, in Proceedings ISPRS, Kyoto;
- Leckie D.G., 1994, Possible Airborne Sensor, Processing and Interpretation Systems for Major Forestry Applications, in Proceedings of the first International Airborne Remote Sensing Conference and Exhibition (I.A.R.S.C.E), Strasbourg; ou
- Ambrosia V.G. et al., 1994, AIRDAS, Proceedings of the I.A.R.S.C.E, Strasbourg.

Par le brevet US-A- 5 379 065, on connaît un système photosensible à matrice active pour l'acquisition et le traitement d'images prises depuis un aéronef ou un satellite. Ce système comporte des moyens de compensation des mouvements d'image de bandes de la surface terrestre successivement acquises permettant, avec une même ouverture de faire le temps d'exposition en contrôlant le temps durant lequel la surface photosensible est activée.

Par le document : Neville, A. et al : « Development and Evaluation of the METS II Multidetector Electro-optical Imaging Scanner » ; Proceedings. of the SPIE - The International Society for Optical Engineering, 1983, on connaît aussi un système de surveillance aéroportée comportant l'utilisation d'une matrice d'éléments CCD sur laquelle on envoie sélectivement des faisceaux issus de filtres optiques interposés sur le trajet des rayons captés, et des moyens de contrôle de gain, de compensation et de décalage permettant notamment de corriger les effets des mouvements d'un aéronef.

Le système statique d'acquisition et de traitement d'images selon l'invention permet la surveillance d'une zone depuis un ou plusieurs aéronefs, dans le but de détecter des phénomènes liés à des altérations de cette zone. Il comporte un ensemble embarqué comprenant un appareil de prise de vues avec une matrice rectangulaire d'éléments photosensibles, adapté à acquérir séquentiellement des images de bandes successives de la zone survolée, transversales par rapport à la direction d'évolution de l'aéronef, l'image d'une même bande transversale étant étalée sur la matrice et acquise dans une série de fenêtres spectrales juxtaposées, et un ensemble de commande comprenant des moyens de sommation des signaux correspondant à des fenêtres spectrales définies, et des moyens de pondération sélective des signaux sommés pour former des images de la zone, dans une ou plusieurs bandes spectrales regroupant chacune un nombre défini de fenêtres spectrales sélectionnées.

Le système est caractérisé en ce que les moyens de pondération sont adaptés à introduire dans les sommations, des coefficients de pondération pour moduler à la fois la largeur spectrale des fonctions spectrales de chacune des bandes spectrales formées, ainsi que la forme de son spectre, en fonction de la nature des phénomènes à analyser dans le cadre d'une certaine application.

Suivant un mode de réalisation, l'ensemble de commande est adapté à donner différentes fonctions spectrales à une même bande spectrale par un changement des pondérations appliquées sélectivement aux différentes fenêtres spectrales incluses dans chaque bande spectrale, de manière à détecter différentes causes d'altération dans la zone surveillée.

Le système comporte par exemple des moyens pour repérer la position de l'aéronef et les fluctuations de sa trajectoire, et l'ensemble de commande comporte un calculateur programmé pour sélectionner parmi les signaux issus des éléments photosensibles de ladite matrice, ceux permettant de raccorder à la suite les unes des autres, les bandes transversales par rapport à la direction d'évolution de l'aéronef de la zone successivement survolées.

Le système peut comporter des moyens de transmission d'images à une station éloignée.

Suivant un mode de réalisation, le système comporte un ensemble de traitement pour appliquer aux images, des traitements spécifiques adaptés à mettre en évidence des modifications significatives de la zone survolée.

Le système peut être appliqué par exemple à la détection de phénomènes tels que des incendies de zones de végétation ou à la détection d'événements climatiques tels que la sécheresse, la verse, la grêle, le gel, ou encore à la détection de dégâts dus à une population animale ou des agents pathogènes, ou bien encore à la détection des effets de la pollution par des hydrocarbures.

Le système selon l'invention est de conception relativement simple et, du fait du mode de formation des images à partir des éléments sensibles de l'appareil de prise de vues, il permet de réaliser facilement des traitements complexes :
a) pour faire ressortir des aspects de phénomènes affectant le site ou une partie du site, liés au spectre de fréquence de la lumière qui en émane; ou
b) pour corriger instantanément les brouillages provoqués sur les images acquises par l'instabilité de l'aéronef sur la trajectoire qui lui est assignée.

Le système est statique. Il permet l'acquisition d'images et la sélection de bandes spectrales sans recourir comme nombre de systèmes antérieurs à des mécanismes de balayage optique ou d'interposition de filtres optiques, sources de nombreuses difficultés de mise en oeuvre et de réglage.

L'ensemble de commande à bord peut comporter des modules de pré-traitement des images permettant de restreindre la quantité de données à transmettre par voie hertzienne à la station de commande et d'intervention au sol. La sélection qu'il est possible d'opérer par voie logicielle à l'intérieur des images de la région survolée, permet d'isoler facilement les contributions de parties du champ ou de longueurs d'onde particulières au sein de chacune des bandes spectrales sélectionnées, en fonction des indices à détecter et d'une manière bien connue de l'homme de l'art dans le cadre de l'application considérée.

D'autres caractéristiques et avantages du système selon l'invention. apparaîtront à la lecture de la description ci-après de modes de réalisation décrits à titre d'exemples non limitatifs, en se référant aux dessins annexés où :
- la Fig.1 est un schéma synoptique général du système aéroporté d'acquisition sélective et de transmission d'images;
- la Fig.2 est un schéma synoptique d'un système de collecte et de traitement d'images dans une station éloignée;
- la Fig.3 montre schématiquement l'appareil de prise de vues à matrice CCD;
- la Fig.4 illustre l'affectation des différentes lignes et colonnes de cette matrice CCD d'acquisition d'images ;
- la Fig.5 illustre la formation de fonctions spectrales à partir de bandes de fréquence de largeurs sélectionnées;
- la Fig.6 montre un mode de réalisation d'un sous-ensemble de formation d'une fonction spectrale;
- la Fig.7 illustre l'effet d'un roulis de l'aéronef sur les images captées.

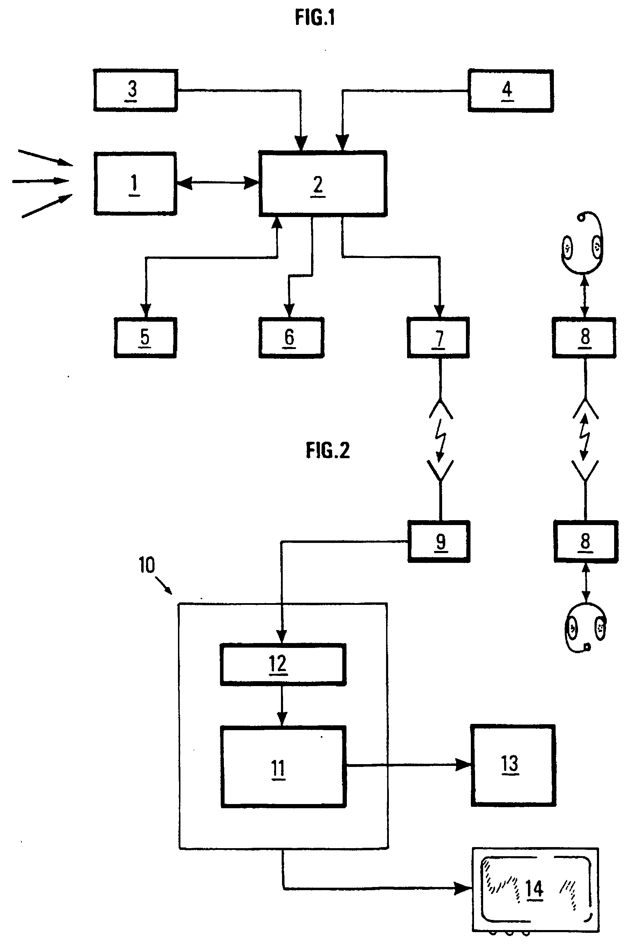

Le système embarqué comporte (Fig.1) un appareil 1 de prise de vues d'un site survolé par un aéronef ou un satellite, associé à un ensemble d'acquisition et de commande 2 adapté à former, sélectionner et corriger des images du site survolé. L'ensemble 2 est connecté à un appareil de navigation 3, permettant l'association aux images acquises à chaque instant de coordonnées géographiques, et aussi à un appareil 4 de contrôle d'attitude dont les indications permettent un recalage des images acquises en fonction des fluctuations de trajectoire et d'assiette de l'aéronef. Le système comporte également des moyens d'enregistrement 5, des moyens de visualisation 6 permettant différents contrôles : bon alignement par rapport à la zone de survol prévue, conformité de la situation météorologique (absence de nuages, ombres éventuelles etc.) qualité des images acquises. Les images enregistrées sont séquentiellement transmises vers la station éloignée par un système de transmission hertzienne 7. Un émetteur-récepteur VHF 8 permet une liaison phonique avec la station éloignée.

L'ensemble de commande et d'acquisition peut comporter un ou plusieurs modules pour appliquer aux images formées, un certain nombre de pré-traitements permettant de diminuer le volume de données à transmettre.

Les images transmises depuis l'aéronef sont reçues séquentiellement par un récepteur hertzien 9 et acquises par un ensemble d'acquisition et de traitement 10 comprenant un micro-ordinateur 11 pourvu de cartes d'acquisition vidéo 12, et d'un module de programmes de traitement thématique adapté spécifiquement à la mission. Les images traitées pour mettre en évidence, au moyen de codages en couleur par exemple, les signes indicatifs d'un phénomène recherché, sont mémorisées par un enregistreur vidéo 13 et restituées par un ou plusieurs moniteurs vidéo 14.

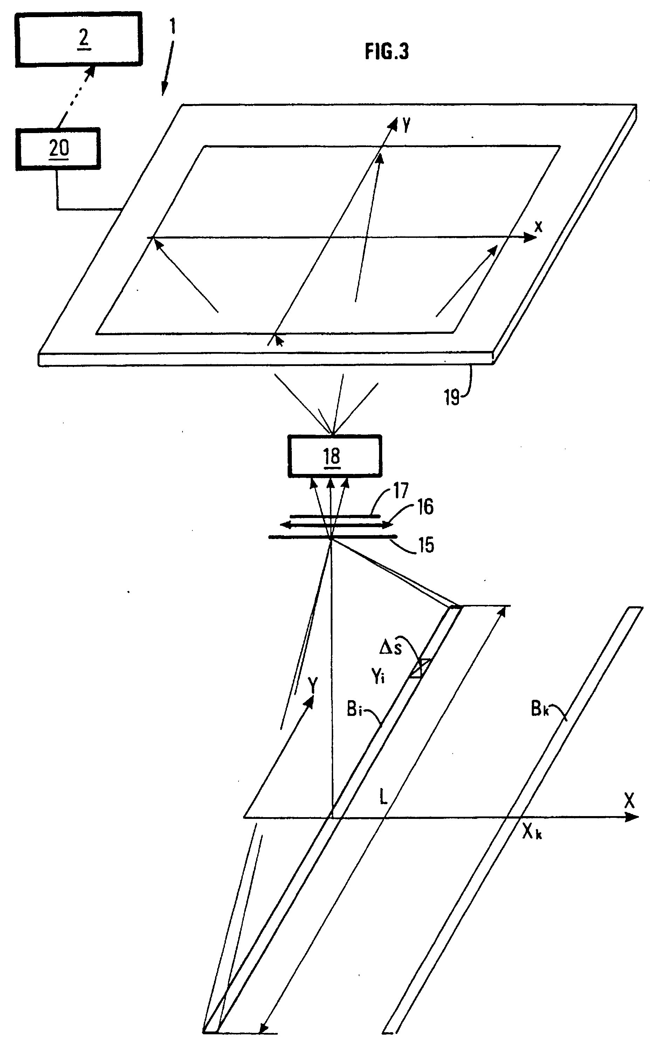

L'appareil de prise de vues 1 schématisé à la Fig.3 comporte un système optique comprenant un objectif 15 associé à une fente 16 et éventuellement un filtre optique passe-bande 17 choisi pour présélectionner une ou plusieurs gammes spectrales utiles dans le cadre de l'analyse du phénomène étudié, ce système formant l'image d'une bande de terrain de largeur L suivant l'axe Y transversalement à la direction X de déplacement de l'aéronef, sur un disperseur spectral 18 tel qu'un réseau. Le faisceau lumineux issu de réseau 18, est reçu sur une matrice rectangulaire 19 d'éléments sensibles, de type CCD par exemple, connectée à des circuits 20 d'amplification à gain réglable et de conversion analogique-numérique.

On peut choisir par exemple une matrice CCD 19 dont le nombre N1 de lignes et le nombre N₂ de colonnes sont des puissances entières du nombre 2. Les nombres N₁ de lignes et N₂ de colonnes sont respectivement égaux par exemple à 2ⁿ¹ (N.B. 2 à la puissance ni) et 2ⁿ² colonnes. On peut choisir par exemple une matrice carrée avec n₁=n₂=9 ou 10 comportant par conséquent 512 ou 1024 lignes et 512 ou 1024 colonnes.

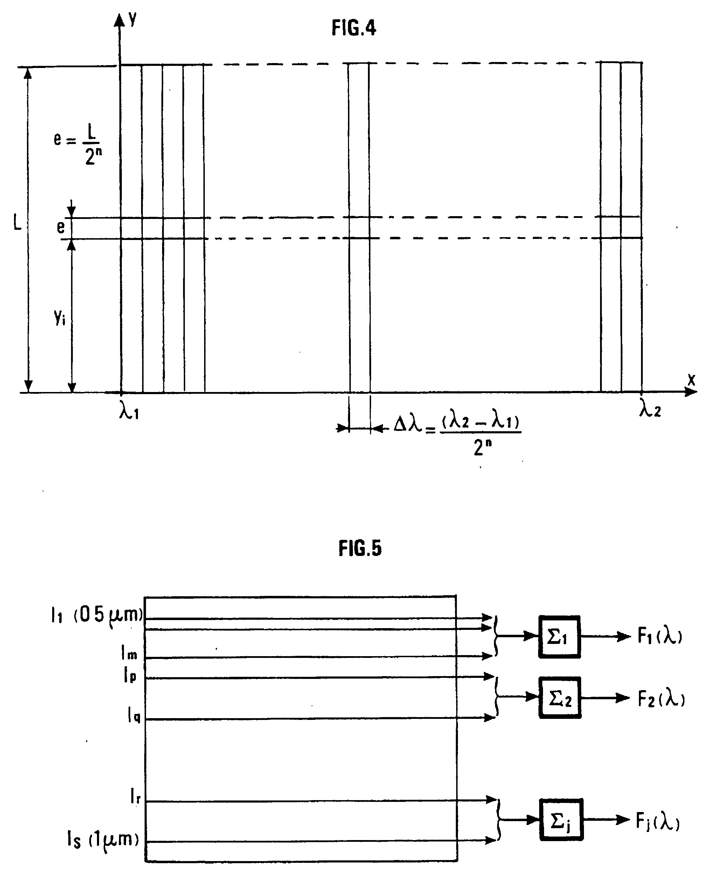

La ligne parallèle à l'axe xx à l'ordonnée yi de la matrice (Fig.4) représente par exemple l'image de la portion ΔS (Fig.3) de la bande de terrain observée Bi, dans N₂ "fenêtres" spectrales adjacentes de largeur Δλ = (λ₂-λ₁)/N₂ où (λ₂-λ₁) représente la largeur de la bande spectrale sélectionnée par le système optique 16, 17, 18. De la même façon, chaque colonne yk (k = 1, 2, ... N₁) représente par exemple l'image d'une bande transversale Bk à l'abscisse Xk sur le terrain, dans une fente spectrale Δλk. On dispose ainsi de N₁XN₂ signaux bi-dimensionnels ouvrant différentes possibilités de combinaisons pour
- mettre en évidence des contributions de bandes spectrales particulières ou de portions de terrain survolé,
- introduire des pondérations ou bien encore
- prendre en compte des perturbations de trajectoire de l'aéronef comme on va le voir ci-après.

L'ensemble de pilotage 2 comporte (Fig.5) des moyens de sommation Σ1, Σ2, ... Σj permettant de former des signaux représentatifs de fonctions spectrales F1(λ) ... Fj(λ) regroupant chacune un nombre bien défini de fenêtres spectrales de largeur Δλ choisies parmi les N₂ fenêtres spectrales ou lignes de matrice disponibles, en introduisant éventuellement dans les sommations des coefficients de pondération ai,j qui permettent de moduler à la fois la largeur spectrale de chacune de ces fonctions F1(λ) à Fj(λ) ainsi que la forme de son spectre.

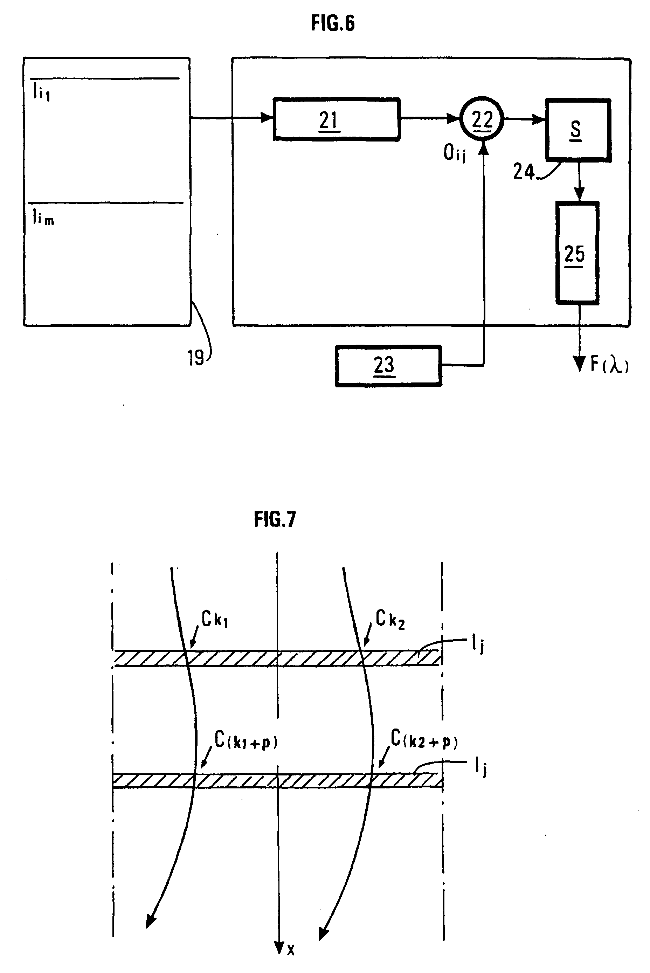

Ces sommations peuvent être effectuées par exemple comme indiqué sur la Fig.6. Pour former une fonction spectrale F(λ), la matrice CCD 19 est connectée à un registre à décalage 21 qui lit successivement m lignes 11 à lm correspondant à m fenêtres spectrales à sommer. Chaque ligne comporte par exemple M mots numériques de huit ou seize bits par exemple, traduisant les signaux lus aux M cellules de la ligne correspondante de la matrice CCD. Les M mots de chaque ligne lus dans le registre 21, sont successivement transférés dans un élément de pondération 22 qui les multiplie par un facteur de pondération ai,j prélevé dans une mémoire 23 avant d'être transféré dans un sommateur S 24. Les mots correspondants des m lignes li1 à lim affectés de coefficients de pondération sont sommés et transférés dans un deuxième registre à décalage 25.

Les coefficients de pondération ai,j peuvent être les mêmes pour toutes les lignes de cellules de la matrice (ai,j = a0), ou bien différents pour chacune d'elles mais communs pour toutes les cellules de la même ligne (i=j), ou bien encore différents pour tous les mots à l'intérieur d'une même ligne. En modifiant le contenu des coefficients chargés dans la mémoire de pondération 23, on peut facilement s'adapter à des conditions particulières imposées pour une application. Il est possible par exemple de modifier à volonté la forme de chaque fonction spectrale F(λ), ce qui n'est pas possible avec les filtres interférentiels conventionnels dont la bande passante est prédéfinie et de forme généralement gaussienne.

L'application sélective de coefficients de pondération permet de renforcer le gain appliqués aux images dans des portions de bande spectrale définies où sont particulièrement sensibles les modifications du site en réponse à un phénomène. C'est le cas notamment quand il s'agit de détecter les zones d'un site où la végétation souffre pour des causes diverses : déficit hydrique, pollution, ce qui affecte sa réflectivité ou son émissivité dans certaines bandes spectrales.

Cette faculté de lecture et de pondération sélective des cellules de la matrice permet également d'isoler et de pondérer les contributions de portions sélectionnées des bandes Bi du site défilant sous l'aéronef, successivement analysées.

On peut de ce fait tenir compte des fluctuations de l'aéronef sur sa trajectoire et notamment des mouvements de tangage qui peuvent apporter parfois un certain désordre temporel dans la succession des bandes de terrain Bi acquises, et des mouvements de roulis qui changent les ordonnées Yi des portions de bande B effectivement vues à chaque instant par les différentes cellules de la matrice.

Un mouvement de roulis par exemple affectant la trajectoire de l'aéronef, peut décaler la série de cellules d'une ligne lj de la matrice "voyant" une portion de terrain survolée C'est une série Ck₁ à Ck₂ qui est concernée à un instant d'acquisition d'image (Fig.7) et une série décalée Ck₁₊ₚ à Ck₂₊ₚ à l'instant d'acquisition suivant. L'ensemble 2 (Fig.1) recevant en permanence les indications de l'appareil de contrôle d'attitude 4, est adapté à appairer les séries successives pour compenser les décalages.

Un mouvement de tangage de l'aéronef a pour effet de brouiller l'ordre normal de succession des bandes de terrain vues par les lignes de cellules sensibles, une bande de terrain déjà "vue" se trouvant de nouveau dans le champ capté par l'appareil de prise de vues, du fait par exemple d'un mouvement de plongée de l'aéronef. De la même façon, l'ensemble 2 tient compte des indications de l'appareil de contrôle d'attitude 4, de façon à réordonner les images des bandes de terrain défilant sous l'aéronef.

L'appareil de prise de vues 1 peut comporter selon les disponibilités et les bandes spectrales analysées dans le cadre de l'application envisagée pour le dispositif, une ou plusieurs caméras associées à des moyens d'étalement spectral analogue au disperseur spectral 18.

On ne sortirait pas du cadre de l'invention en utilisant une pluralité de systèmes embarqués à bord de plusieurs aéronefs, tous transmettant leurs images à une station centrale chargée de les collecter et d'effectuer sur elles des traitements spécifiques en relation avec les phénomènes à mettre en évidence, ou bien encore en regroupant dans un même aéronef tous les moyens nécessaires à l'acquisition et au traitement des images.

Dans le cadre d'une utilisation du dispositif pour la détection dans une zone en végétation, de signes indicatifs d'un stress de la végétation, et la présence de points propices à la naissance du feu ou à sa propagation, les ensembles d'acquisition 2 et 10 peuvent être avantageusement pourvus de logiciels codant des algorithmes de traitement d'images. L'appareil de prise de vues, prend des images de la zone survolée dans une première bande spectrale choisie dans la partie rouge du spectre visible, dans une deuxième bande spectrale du proche infra-rouge, et dans une troisième bande spectrale dans l'infra-rouge thermique choisie pour repérer des parties de la zone présentant à la fois un stress hydrique et des points chauds avec des températures plus ou moins élevées selon que l'on opère dans le cadre d'une opération de prévention ou de combat. A partir de ces images, on forme des images composites codées, obtenues par un codage couleur par exemple, des bandes spectrales précitées et on combine les images obtenues dans les trois bandes spectrales, suivant un algorithme de traitement spécifique qui fait ressortir ainsi les risques de développement incendiaire causés par ce déficit et un échauffement local anormal, décrit dans une demande de brevet parallèle 96/06906, au nom du demandeur.

## Revendications

1. Système d'acquisition et de traitement d'images d'une zone surveillée depuis au moins un aéronef, dans le but de détecter des phénomènes liés à des altérations de cette zone comportant un ensemble embarqué comprenant un appareil de prise de vues (1) avec une matrice rectangulaire d'éléments photosensibles, adapté à acquérir séquentiellement des images de bandes successives (Bi) de la zone survolée, transversales par rapport à la direction d'évolution de l'aéronef, l'image d'une même bande transversale étant étalée sur la matrice et acquise dans une série de fenêtres spectrales juxtaposées, et un ensemble de commande (2) comprenant des moyens de sommation (Σ) des signaux correspondant à des fenêtres spectrales définies, et des moyens (22, 23) de pondération sélective des signaux sommés pour former des images de la zone, dans une ou plusieurs bandes spectrales regroupant chacune un nombre défini de fenêtres spectrales sélectionnées, **caractérisé en ce que** les moyens de pondération sont adaptés à introduire dans les sommations, des coefficients de pondération (a_{i,j}) pour moduler à la fois la largeur spectrale des fonctions spectrales F(λ) de chacune des bandes spectrales formées, ainsi que la forme de son spectre, en fonction de la nature des phénomènes à analyser dans le cadre d'une certaine application.

2. Système selon la revendication 1, **caractérisé en ce que** l'ensemble de commande (2) est adapté à donner différentes fonctions spectrales à une même bande spectrale par un changement des pondérations appliquées sélectivement aux différentes fenêtres spectrales incluses dans chaque bande spectrale, pour détecter différentes causes d'altération dans la zone surveillée.

3. Système selon l'une des revendications précédentes, comportant des moyens (3, 4) pour repérer la position de l'aéronef et les fluctuations de sa trajectoire, **caractérisé en ce que** l'ensemble de commande (2) comporte un calculateur programmé pour sélectionner parmi les signaux issus des éléments photosensibles de ladite matrice, ceux permettant de raccorder à la suite les unes des autres, les bandes transversales par rapport à la direction d'évolution de l'aéronef de la zone successivement survolées.

4. Système selon l'une des revendications précédentes, **caractérisé en ce qu'**il comporte des moyens de transmission d'images à une station éloignée.

5. Système selon l'une des revendications précédentes, **caractérisé en ce qu'**il comporte un ensemble de traitement (10-14) pour appliquer aux images, des traitements spécifiques adaptés à mettre en évidence des modifications significatives de la zone survolée.

6. Application du système selon l'une des revendications 1 à 5 à la détection de phénomènes tels que des incendies de zones de végétation.

7. Application du système selon l'une des revendications 1 à 5 à la détection d'événements climatiques tels que la sécheresse, la verse, la grêle, le gel.

8. Application du système selon l'une des revendications 1 à 5 à la détection de dégâts dus à une population animale ou des agents pathogènes.

9. Application du système selon l'une des revendications 1 à 5 à la détection des effets de la pollution par des hydrocarbures.

## Patentansprüche

1. System zur Aufnahme und Bearbeitung von Bildern hinter wenigstens einem Flugzeug überwachten Zone, mit dem Ziel, Phänomene zu detektieren, die mit Veränderungen dieser Zone verbunden sind, welches System eine Anordnung an Bord umfasst, welche einen Bildaufnahmeapparat (1) mit einer rechtwinkligen Matrix von photosensitiven Elementen zur sequenziellen Bildaufnahme von aufeinanderfolgenden Bildern von Streifen (Bi) der überflogenen Zone umfasst, welche quer bezüglich der Fortbewegungsrichtung des Flugzeuges ist, wobei das Bild einen selben Querstreifens auf der Matrix ausgebildet ist und in einer Reihe von nebeneinanderliegenden Spektralfenstern aufgenommen wird und eine Steuerungsanordnung (2) umfasst, welche Summierungsmittel (Σ) von Signalen umfasst, welche definierten Spektralfenstern entsprechen und Mittel (22, 23) zur selektiven Gewichtung der summierten Signale umfasst, um Bilder der Zone in einer oder mehreren Spektralbanden zu bilden, für jede eine definierte Anzahl von ausgewählten Spektralfenstern vereint, **dadurch gekennzeichnet, dass** die Gewichtungsmittel zur Einführung von Gewichtungskoeffizienten (aᵢⱼ) in die Summierungen zum gleichzeitigen Modulieren der Breite der Spektralfunktion F(λ) von jeder der gebildeten Spektralbanden sowie der Form deren Spektrums in Abhängigkeit der Natur der im Rahmen einer bestimmten Anwendung zu analysierenden Phänomene ausgelegt sind.

2. System nach Anspruch 1, **dadurch gekennzeichnet, dass** die Steuerungsanordnung (2) ausgelegt ist, um verschiedene Spektralfunktionen bei einer gleichen Spektralbande durch eine Änderung der selektiv auf die verschiedenen in jeder Spektralbande eingeschlossenen Spektralfenster angewandten Gewichte zu ergeben, um verschiedene Veränderungsursachen an der überwachten Zone zu detektieren.

3. System nach einem der vorhergehenden Ansprüche, das Mittel (3,4) zum Ausfindigmachen der Flugzeugposition und von dessen Bahnfluktuationen umfasst, **dadurch gekennzeichnet, dass** die Steuerungsanordnung (2) einen Rechner umfasst, der programmiert ist, um unter den Signalen aus den photosensitiven Elementen der Matrix jene zu selektieren, die es ermöglichen, aufeinanderfolgend die Transversalbanden bzgl. der Fortbewegungsrichtung des Flugzeuges von der fortschreitend überflogenen Zone miteinander zu verbinden.

4. System nach einem der vorhergehenden Ansprüche, **dadurch gekennzeichnet, dass** es Mittel zur Übertragung von Bildern an eine entfernte Station umfasst.

5. System nach einem der vorhergehenden Ansprüche, **dadurch gekennzeichnet, dass** es eine Bearbeitungsanordnung (10-14) zur Anwendung von Bearbeitungen auf die Bilder umfasst, die spezifisch zum Nachweis von bedeutenden Modifikationen der überflogenen Zone ausgelegt sind.

6. Verwendung des Systems nach einem der Ansprüche 1 bis 5 zur Detektion von Großbränden von Vegetationszonen.

7. Verwendung des Systems nach einem der Ansprüche 1 bis 5 zur Detektion von Klimaereignissen wie Trockenheit, starkem Regen, Hagel, Frost.

8. Verwendung des Systems nach einem der Ansprüche 1 bis 5, zur Detektion von Schäden aufgrund einer Tierpopulation oder von pathogenen Reagenzien.

9. Verwendung des Systems nach einem der Ansprüche 1 bis 5, zur Detektion von Umweltverschmutzungswirkungen durch Kohlenwasserstoffe.

## Claims

1. System for the acquisition and processing of images of a zone monitored from at least one aircraft for the purpose of detecting phenomena linked to alterations in that zone comprising an airborne unit including an apparatus for capturing images (1) with a rectangular matrix of photosensitive elements suitable for sequentially acquiring images in successive strips (Bi), transversal relative the direction of movement of the aircraft, of the area overflown, the image of a given transversal strip being spread over the matrix and acquired in a series of juxtaposed spectral windows, and a control assembly (2) comprising means of adding together (Σ) the signals corresponding to the defined spectral windows, and means (22, 23) of selectively weighting the added signals in order to form images of the zone in one or more spectral strips each grouping together a defined number of selected spectral windows, **characterised in that** the means of weighting is adapted to introduce into the totals weighting coefficients (aᵢⱼ) to modulate both the spectral width of the spectral functions F(λ) of the each of the spectral bands formed and the shape of its spectrum depending on the nature of the phenomena to be analysed in the context of a certain application.

2. System according to Claim 1, **characterised in that** the control assembly (2) is adapted to give different spectral functions to a given spectral band by changing the weightings applied selectively to the different spectral windows included in each spectral band in order to detect different causes of alteration in the zone monitored.

3. System according to one of the previous Claims, including means (3, 4) for identifying the position of the aircraft and the fluctuations in its trajectory, **characterised in that** the control assembly (2) incorporates a programmed computer to select from among the signals from the photosensitive elements of the said matrix those which allow the linkage one after the other of the transversal strips, relative to the direction of movement of the aircraft, of the zones successively overflown.

4. System according to one of the previous Claims, **characterised in that** it incorporates means of transmitting images to a remote station.

5. System according to one of the previous Claims, **characterised in that** it incorporates a means of processing (10-14) to apply to the images specific treatments suitable for revealing significant changes in the zone overflown.

6. Application of the system according to one of Claims 1 to 5 to the detection of phenomena such as fires in zones of vegetation.

7. Application of the system according to one of Claims 1 to 5 to the detection of climatic events such as drought, heavy rain, hail and frost.

8. Application of the system according to one of Claims 1 to 5 to the detection of damage due to an animal population or to pathogenic agents.

9. Application of the system according to one of Claims 1 to 5 to the detection of the effects of pollution by hydrocarbons.
